# EUROPEAN PATENT SPECIFICATION

(11) **EP 4 133 814 B1**
(45) Date of publication and mention of the grant of the patent: **08.11.2023**
(21) Application number: 21717387.1
(22) Date of filing: 06.04.2021
(51) Int. Cl.: H04W 60/04

(54) **NETWORK REQUESTED REGISTRATION PROCEDURE INITIATION**
NETZWERKANGEFORDERTE INITIIERUNG EINES REGISTRIERUNGSVERFAHRENS
LANCEMENT D'UNE PROCÉDURE D'ENREGISTREMENT DEMANDÉE PAR UN RÉSEAU

(30) Priority: 06.04.2020 US 202063005690 P
(43) Date of publication of application: 15.02.2023
(73) Proprietor: Telefonaktiebolaget LM ERICSSON (PUBL), 16483 Stockholm (SE)
(72) Inventor: WASS, Mikael, 511 69 Sätila (SE); JOHANSSON, Kaj, 417 64 Göteborg (SE); CHEN, Qian, 431 49 Mölndal (SE)
(74) Representative: Ericsson
(86) International application number: PCT/EP2021/058836
(87) International publication number: WO 2021/204742

(56) References cited:
- WO-A1-2019/160390
- US-A1- 2019 268 835
- QUALCOMM INCORPORATED ET AL: "Including CAG information list in REGISTRATION ACCEPT message", 3GPP DRAFT; CP-200135, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG CT, no. E-Meeting; 20200316 - 20200318 6 March 2020 (2020-03-06), XP051859799, Retrieved from the Internet: URL:https://ftp.3gpp.org/tsg_ct/TSG_CT/TSG C_87e/Docs/CP-200135.zip CP-200135.docx [retrieved on 2020-03-06]
- ERICSSON: "Generic UE configuration update trigger for registration and EC Restriction change", 3GPP DRAFT; C1-202230, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Online Meeting ;20200416 - 20200424 9 April 2020 (2020-04-09), XP051869666, Retrieved from the Internet: URL:https://ftp.3gpp.org/tsg_ct/WG1_mm-cc- sm_ex-CN1/TSGC1_123e/Docs/C1-202230.zip C1-202230_UCU_Registration_trigger_for_ECR .doc [retrieved on 2020-04-09]

## Description

### TECHNICAL FIELD AND BACKGROUND

The invention relates to a method and a UE for network requested registration procedure initiation.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

The current Third Generation Partnership Project (3GPP) Fifth Generation System (5GS) Non-Access Stratum (NAS) specification supports indication of network supported features from the network to the User Equipment (UE) to inform the UE of features that the UE can, and is allowed, to use. This indication of network supported features is signaled in the Registration procedure, which is a UE initiated procedure. In cases when the network needs to change the support of a feature for a specific UE, the Access and Mobility Management Function (AMF) can initiate a UE configuration update procedure and indicate a request for the UE to perform the Registration procedure. The request for registration can result in release of the current N1 NAS signaling connection for cases of AMF relocation, or with no N1 NAS signaling connection release, depending on setting of parameters and indications in the CONFIGURATION UPDATE COMMAND message.

### SUMMARY

There currently exist certain challenge(s). When registration is requested via the UE configuration update procedure, the flag to indicate requested registration will result in N1 NAS signaling connection release unless an additional Information Element (IE) for the specific reason of requested registration is included. The only current such additional indication specified is Mobile Initiated Connection Only (MICO) indication. To support additional reasons for the network to request registration from UE, a new IE indicating the specific reason would need to be introduced, as use of the MICO specific indication would not be applicable. The more such reasons are possibly introduced in the future, the more lEs would be needed which would result in inefficient protocol design and larger message size, if no additional action is needed in the UE except registration procedure initiation. The invention, which aims to overcome these challenges, is defined by the appended claims.

Certain aspects of the present disclosure and their embodiments may provide solutions to the aforementioned or other challenges. Systems and methods are disclosed herein that provide, in the UE configuration update procedure, a generic indication to request a registration from a UE, while keeping the current N1 NAS signaling connection. In one embodiment, the indication is added in an existing IE with the requested registration. When the UE receives a CONFIGURATION UPDATE COMMAND message with registration indication and the new indication to keep the N1 NAS signaling connection, the UE initiates the registration procedure without release of the current N1 NAS signaling connection and no evaluation of specific network reasons to request the registration is needed.

There are, proposed herein, various embodiments which address one or more of the issues disclosed herein.

Certain embodiments may provide one or more of the following technical advantage(s). With a generic indication to keep the N1 NAS signaling connection at request of registration, no further new IE is needed. For any new case in the future to keep the N1 NAS signaling connection at request of registration, no new case specific IE is needed. The new flag can be used for all cases when the network needs to request registration without other specific action in the UE. Therefore, no reason specific IEs need to be defined and included in the CONFIGURATION UPDATE COMMAND message, reducing message size and specification complexity. In cases of more than one reason to request registration the benefit of a generic indication will be even bigger.

### BRIEF DESCRIPTION OF THE DRAWINGS

- **Figure 1**: illustrates one example of a cellular communications system 100.
- **Figure 2**: illustrates a wireless communication system represented as a 5G network architecture, which can be viewed as one particular implementation of the system 100 of Figure 1.
- **Figure 3**: illustrates a 5G network architecture using service-based interfaces between the NFs in the control plane.
- **Figure 4**: illustrates a UE configuration update procedure in accordance with one embodiment of the present disclosure.
- **Figure 5**: a schematic block diagram of a network node 500.
- **Figure 6**: is a schematic block diagram that illustrates a virtualized embodiment of the network node 500.
- **Figure 7**: is a schematic block diagram of the network node 500.
- **Figure 8**: is a schematic block diagram of a wireless communication device 800 according to some embodiments of the present disclosure.
- **Figure 9**: is a schematic block diagram of the wireless communication device 800 according to some other embodiments of the present disclosure.

### DETAILED DESCRIPTION

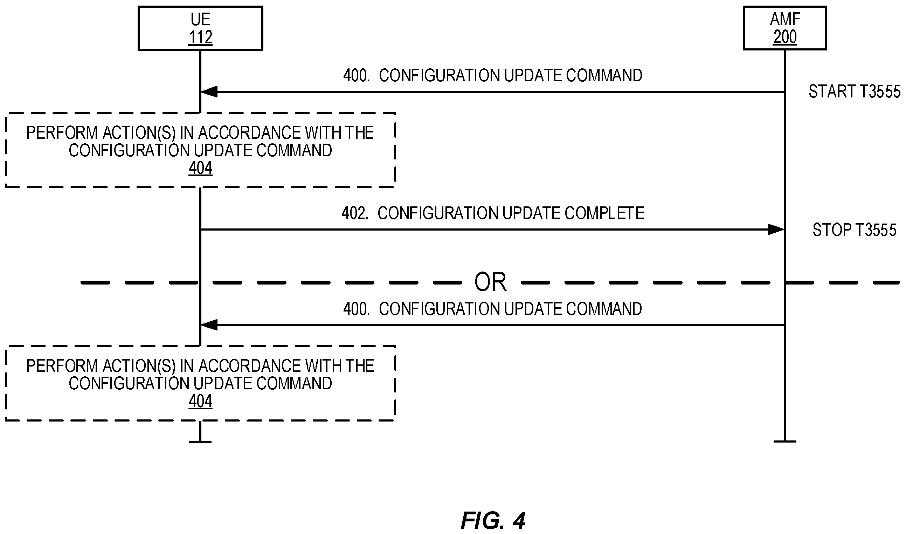

The invention is described with reference to figures 4, 8 and 9 along with the related passages of the description. The other figures pertain to non-claimed embodiments or aspects and are presented only for illustrative purposes. Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Additional information may also be found in the document(s) provided in the Appendix.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

### Figure 1

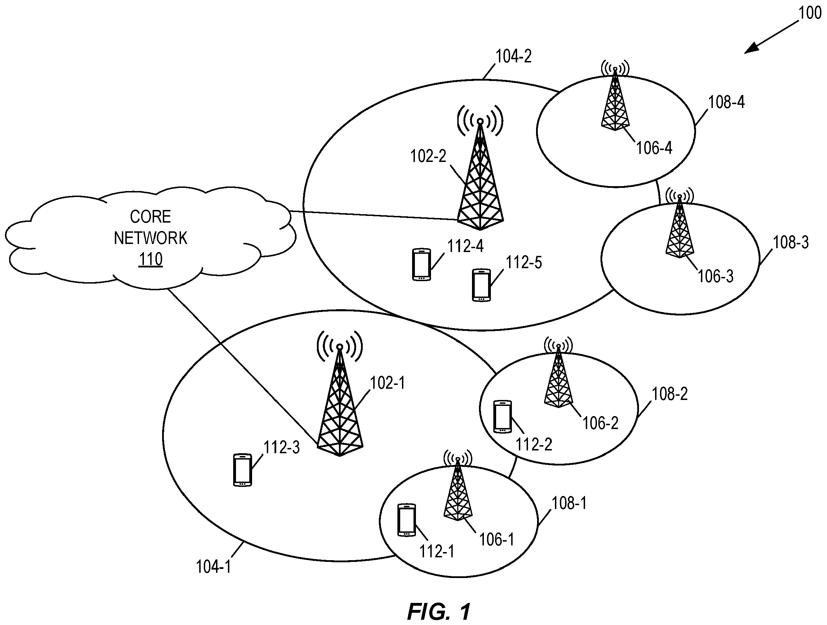

**Figure 1** illustrates one example of a cellular communications system 100 in which embodiments of the present disclosure may be implemented. In the embodiments described herein, the cellular communications system 100 is a 5G System (5GS). The 5GS includes 5G Core (5GC) and a Next Generation RAN (NG-RAN) including NR base stations (gNBs) and, optionally, next generation eNBs (ng-eNBs) (i.e., LTE RAN nodes connected to the 5GC). In this example, the RAN includes base stations 102-1 and 102-2, which in the NG-RAN are referred to as gNBs (i.e., NR RAN nodes) or, optionally, ng-eNBs (i.e., LTE RAN nodes connected to the 5GC), controlling corresponding (macro) cells 104-1 and 104-2. The base stations 102-1 and 102-2 are generally referred to herein collectively as base stations 102 and individually as base station 102. Likewise, the (macro) cells 104-1 and 104-2 are generally referred to herein collectively as (macro) cells 104 and individually as (macro) cell 104. The RAN may also include a number of low power nodes 106-1 through 106-4 controlling corresponding small cells 108-1 through 108-4. The low power nodes 106-1 through 106-4 can be small base stations (such as pico or femto base stations) or Remote Radio Heads (RRHs), or the like. Notably, while not illustrated, one or more of the small cells 108-1 through 108-4 may alternatively be provided by the base stations 102. The low power nodes 106-1 through 106-4 are generally referred to herein collectively as low power nodes 106 and individually as low power node 106. Likewise, the small cells 108-1 through 108-4 are generally referred to herein collectively as small cells 108 and individually as small cell 108. The cellular communications system 100 also includes a core network 110, which in the 5GS is referred to as the 5G Core (5GC). The base stations 102 (and optionally the low power nodes 106) are connected to the core network 110.

The base stations 102 and the low power nodes 106 provide service to wireless communication devices 112-1 through 112-5 in the corresponding cells 104 and 108. The wireless communication devices 112-1 through 112-5 are generally referred to herein collectively as wireless communication devices 112 and individually as wireless communication device 112. In the following description, the wireless communication devices 112 are oftentimes UEs, but the present disclosure is not limited thereto.

### Figure 2

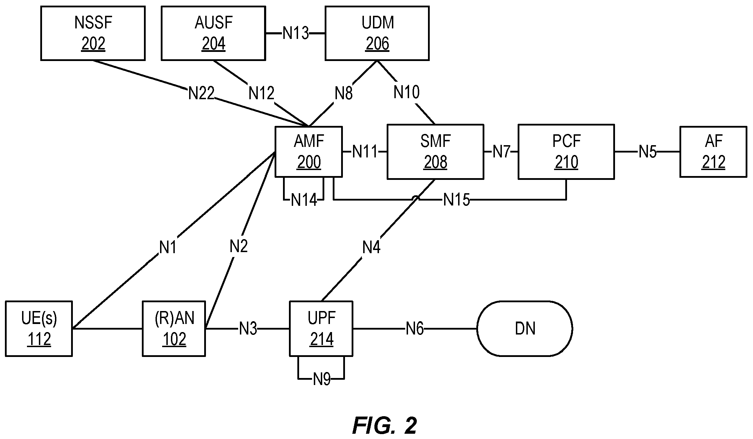

**Figure 2** illustrates a wireless communication system represented as a 5G network architecture composed of core Network Functions (NFs), where interaction between any two NFs is represented by a point-to-point reference point/interface. Figure 2 can be viewed as one particular implementation of the system 100 of Figure 1.

Seen from the access side the 5G network architecture shown in Figure 2 comprises a plurality of UEs 112 connected to either a RAN 102 or an Access Network (AN) as well as an Access and Mobility Management Function (AMF) 200. Typically, the R(AN) 102 comprises base stations, e.g. such as eNBs or gNBs or similar. Seen from the core network side, the 5G core NFs shown in Figure 2 include a Network Slice Selection Function (NSSF) 202, an Authentication Server Function (AUSF) 204, a Unified Data Management (UDM) 206, the AMF 200, a Session Management Function (SMF) 208, a Policy Control Function (PCF) 210, and an Application Function (AF) 212.

Reference point representations of the 5G network architecture are used to develop detailed call flows in the normative standardization. The N1 reference point is defined to carry signaling between the UE 112 and AMF 200. The reference points for connecting between the AN 102 and AMF 200 and between the AN 102 and UPF 214 are defined as N2 and N3, respectively. There is a reference point, N11, between the AMF 200 and SMF 208, which implies that the SMF 208 is at least partly controlled by the AMF 200. N4 is used by the SMF 208 and UPF 214 so that the UPF 214 can be set using the control signal generated by the SMF 208, and the UPF 214 can report its state to the SMF 208. N9 is the reference point for the connection between different UPFs 214, and N14 is the reference point connecting between different AMFs 200, respectively. N15 and N7 are defined since the PCF 210 applies policy to the AMF 200 and SMF 208, respectively. N12 is required for the AMF 200 to perform authentication of the UE 112. N8 and N10 are defined because the subscription data of the UE 112 is required for the AMF 200 and SMF 208.

The 5GC network aims at separating user plane and control plane. The user plane carries user traffic while the control plane carries signaling in the network. In Figure 2, the UPF 214 is in the user plane and all other NFs, i.e., the AMF 200, SMF 208, PCF 210, AF 212, NSSF 202, AUSF 204, and UDM 206, are in the control plane. Separating the user and control planes guarantees each plane resource to be scaled independently. It also allows UPFs to be deployed separately from control plane functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF 200 and SMF 208 are independent functions in the control plane. Separated AMF 200 and SMF 208 allow independent evolution and scaling. Other control plane functions like the PCF 210 and AUSF 204 can be separated as shown in Figure 2. Modularized function design enables the 5GC network to support various services flexibly.

Each NF interacts with another NF directly. It is possible to use intermediate functions to route messages from one NF to another NF. In the control plane, a set of interactions between two NFs is defined as service so that its reuse is possible. This service enables support for modularity. The user plane supports interactions such as forwarding operations between different UPFs.

### Figure 3

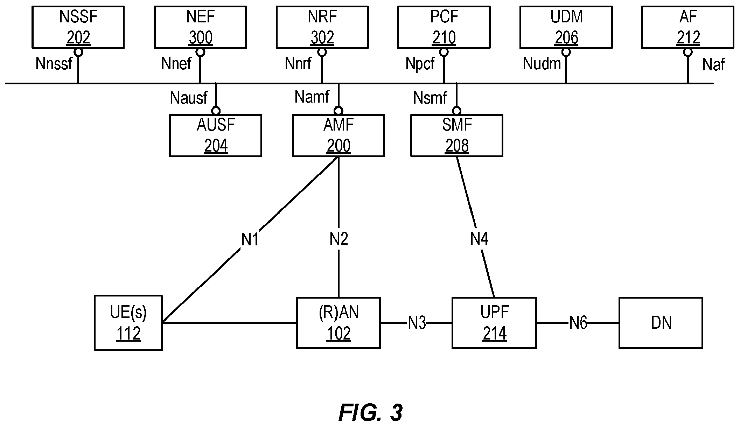

**Figure 3** illustrates a 5G network architecture using service-based interfaces between the NFs in the control plane, instead of the point-to-point reference points/interfaces used in the 5G network architecture of Figure 2. However, the NFs described above with reference to Figure 2 correspond to the NFs shown in Figure 3. The service(s) etc. that a NF provides to other authorized NFs can be exposed to the authorized NFs through the service-based interface. In Figure 3 the service based interfaces are indicated by the letter "N" followed by the name of the NF, e.g. Namf for the service based interface of the AMF 200 and Nsmf for the service based interface of the SMF 208, etc. The Network Exposure Function (NEF) 300 and the Network Repository Function (NRF) 302 in Figure 3 are not shown in Figure 2 discussed above. However, it should be clarified that all NFs depicted in Figure 2 can interact with the NEF 300 and the NRF 302 of Figure 3 as necessary, though not explicitly indicated in Figure 2.

Some properties of the NFs shown in Figures 2 and 3 may be described in the following manner. The AMF 200 provides UE-based authentication, authorization, mobility management, etc. A UE 112 even using multiple access technologies is basically connected to a single AMF 200 because the AMF 200 is independent of the access technologies. The SMF 208 is responsible for session management and allocates Internet Protocol (IP) addresses to UEs. It also selects and controls the UPF 214 for data transfer. If a UE 112 has multiple sessions, different SMFs 208 may be allocated to each session to manage them individually and possibly provide different functionalities per session. The AF 212 provides information on the packet flow to the PCF 210 responsible for policy control in order to support Quality of Service (QoS). Based on the information, the PCF 210 determines policies about mobility and session management to make the AMF 200 and SMF 208 operate properly. The AUSF 204 supports authentication function for UEs or similar and thus stores data for authentication of UEs or similar while the UDM 206 stores subscription data of the UE 112. The Data Network (DN), not part of the 5GC network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

### Figure 4

Embodiments of the present disclosure will now be described in detail. In this regard, **Figure 4** illustrates a UE configuration update procedure in accordance with one embodiment of the present disclosure. As illustrated, the AMF 200 sends a configuration update command to the UE 112 (step 400) that comprises information that indicates to the UE (112) that the UE is to perform a registration procedure. In one embodiment, the AMF 200 starts a timer (T3555) upon sending the configuration update command. The UE 112 performs one or more actions in accordance with the configuration update command (step 402). In one embodiment, the UE 112 sends a configuration update complete message to the AMF 200 (step 404). In one embodiment, the AMF 200 stops the timer (T3555) upon receiving the configuration update complete message. However, as illustrated, in another embodiment, the AMF 200 sends the configuration update command to the UE 112 in step 400, but the UE 112 does not send a configuration update complete message to the AMF 200, nor does the AMF 200 start or stop the timer.

The configuration update command of step 400 includes an indication that indicates, to the UE 112, whether the UE 112 is to maintain the existing N1 NAS signaling connection. For example, the indication may be a single bit that indicates that the existing N1 NAS signaling connection is required to be released if the single bit indication is set to one binary value (e.g., "0") and is not required to be released if the single bit indication is set to the other binary value (e.g., "1"). In one embodiment, the indication is a generic indication in that the indication is applicable regardless of the reason for the configuration update command. In one embodiment, the indication that indicates whether the UE 112 is to maintain the existing N1 NAS signaling connection is included in a configuration update indication IE included in the configuration update command.

In one embodiment, the configuration update command of step 400 includes both a registration request and the indication that indicates, to the UE 112, whether the UE 112 is to maintain the existing N1 NAS signaling connection. Together, the registration request and the indication indicate, to the UE 112, that the UE 112 is to perform a registration procedure and that the UE 112 is or is not to maintain the existing N1 NAS signaling connection at the requested registration. In one embodiment, the registration request and the indication that indicates whether the UE 112 is to maintain the existing N1 NAS signaling connection are both included in a configuration update indication IE included in the configuration update command.

The one or more actions performed by the UE 112 in step 402 include releasing or refraining from releasing the existing N1 NAS signaling connection, in accordance with the indication included in the configuration update command. In addition, if the configuration update command includes a request for the UE 112 to perform the registration procedure, the UE 112 performs the registration procedure (with or without releasing the existing N1 NAS signaling connection in accordance with the indication) in accordance with the request.

The currently specified way to request registration using the UE configuration update procedure for change of MICO mode is achieved by a combination of the registration requested flag (RED) in the configuration update indication IE included in the configuration update command and inclusion of the MICO indication IE in the configuration update command as follows:

| | | | | | |
|---|---|---|---|---|---|
| Configuration update indication IEI | 0 Spare | 0 Spare | RED | ACK | octet 1 |

Registration requested (RED) (octet 1, bit 2):
0 registration not requested
1 registration requested

| | | | | | |
|---|---|---|---|---|---|
| MICO indication IEI | 0 Spare | 0 Spare | SPRTI | RAAI | octet 1 |

Note that the contents of the MICO indication IE are not significant for the use in the UE configuration update procedure as it is the presence only that is evaluated.

To support other cases of requested registration via the UE configuration update procedure where no N1 NAS signaling connection release is desired or required and no other case specific action is needed in the UE 112, in one embodiment of the present disclosure, a new flag is defined using one of the spare bits in the configuration update indication IE. For example, the new flag, referred to as Signaling Connection Release Request (SCRR), may be provided as follows:

| | | | | | |
|---|---|---|---|---|---|
| Configuration update indication IEI | 0 Spare | SCRR | RED | ACK | octet 1 |

Signaling Connection Release Request (SCRR) (octet 1, bit 3)
0 Release of N1 NAS signaling connection required
1 Release of N1 NAS signaling connection not required

In one example alternative embodiment, a new optional IE can be defined. For example, in this example alternative embodiment, the new optional IE is referred to herein as a configuration update parameters IE and can be defined as follows:

| | | | | | |
|---|---|---|---|---|---|
| Configuration update parameters IEI | 0 Spare | 0 Spare | 0 Spare | SCRR | octet 1 |

Signaling Connection Release Request (SCRR) (octet 1, bit 1)
- 0: Release of N1 NAS signaling connection required
- 1 1: Release of N1 NAS signaling connection not required

Common for both protocol implementation alternatives described above is that the flag (SCRR) is not tied to a specific case, but can be used by the network when a subsequent execution of a registration procedure is sufficient for the specific use case at hand.

Further details of one example embodiment of the proposed protocol solution are provided in the attached draft Change Request (CR) for 3GPP TS 24.501.

### Figure 5

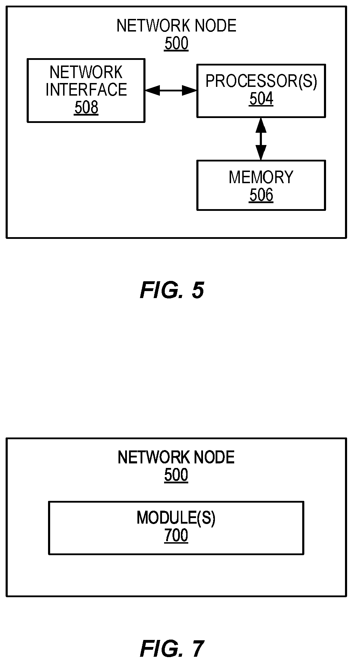

**Figure 5** is a schematic block diagram of a network node 500 according to some embodiments of the present disclosure. Optional features are represented by dashed boxes. The network node 500 may be, for example, a network node that implements the AMF 200 or implements at least some of the functionality of the AMF 200 described herein. As illustrated, the network node 500 includes one or more processors 504 (e.g., Central Processing Units (CPUs), Application Specific Integrated Circuits (ASICs), Field Programmable Gate Arrays (FPGAs), and/or the like), memory 506, and a network interface 508. The one or more processors 504 are also referred to herein as processing circuitry. The one or more processors 504 operate to provide one or more functions of the network node 500 as described herein (e.g., one or more functions of the AMF 200 described herein, e.g., with respect to Figure 4). In some embodiments, the function(s) are implemented in software that is stored, e.g., in the memory 506 and executed by the one or more processors 504.

### Figure 6

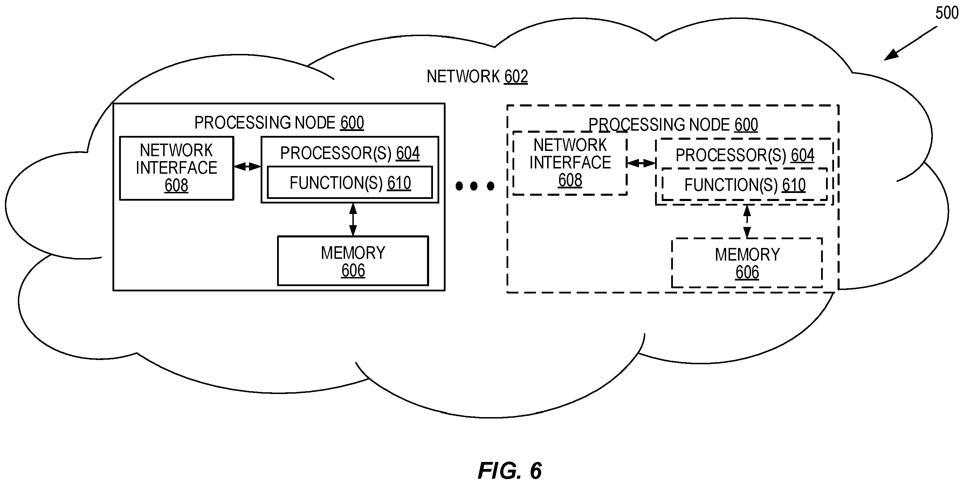

**Figure 6** is a schematic block diagram that illustrates a virtualized embodiment of the network node 500 according to some embodiments of the present disclosure. As used herein, a "virtualized" network node is an implementation of the network node 500 in which at least a portion of the functionality of the network node 500 is implemented as a virtual component(s) (e.g., via a virtual machine(s) executing on a physical processing node(s) in a network(s)). As illustrated, in this example, the network node 500 includes one or more processing nodes 600 coupled to or included as part of a network(s) 602. Each processing node 600 includes one or more processors 604 (e.g., CPUs, ASICs, FPGAs, and/or the like), memory 606, and a network interface 608. In this example, functions 610 of the network node 500 described herein (e.g., one or more functions of the AMF 200 described herein, e.g., with respect to Figure 4) are implemented at the one or more processing nodes 600 or distributed across the two or more of the processing nodes 600 in any desired manner. In some particular embodiments, some or all of the functions 610 of the network node 500 described herein (e.g., one or more functions of the AMF 200 described herein, e.g., with respect to Figure 4) are implemented as virtual components executed by one or more virtual machines implemented in a virtual environment(s) hosted by the processing node(s) 600.

In some embodiments, a computer program including instructions which, when executed by at least one processor, causes the at least one processor to carry out the functionality of the network node 500 or a node (e.g., a processing node 600) implementing one or more of the functions 610 of the network node 500 in a virtual environment according to any of the embodiments described herein (e.g., one or more functions of the AMF 200 described herein, e.g., with respect to Figure 4) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

### Figure 7

**Figure 7** is a schematic block diagram of the network node 500 according to some other embodiments of the present disclosure. The network node 500 includes one or more modules 700, each of which is implemented in software. The module(s) 700 provide the functionality of the network node 500 described herein (e.g., one or more functions of the AMF 200 described herein, e.g., with respect to Figure 4). This discussion is equally applicable to the processing node 600 of Figure 6 where the modules 700 may be implemented at one of the processing nodes 600 or distributed across two or more of the processing nodes 600.

### Figure 8

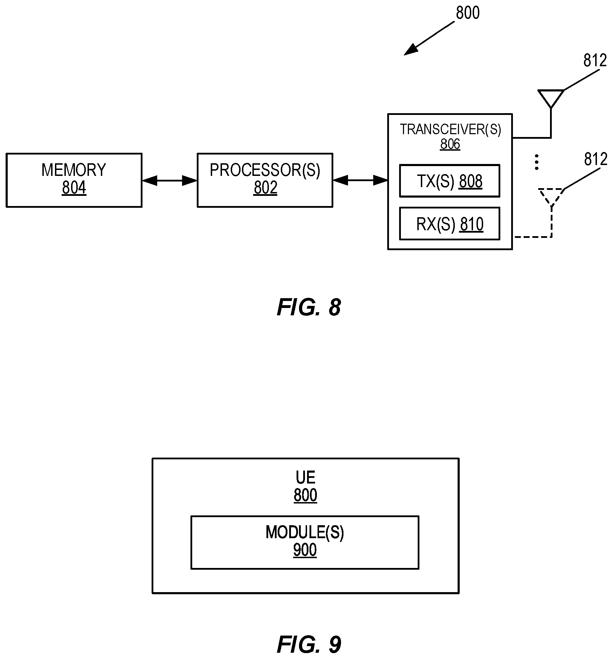

**Figure 8** is a schematic block diagram of a wireless communication device 800 according to some embodiments of the present disclosure. The wireless communication device 800 may be the UE 112 described above. As illustrated, the wireless communication device 800 includes one or more processors 802 (e.g., CPUs, ASICs, FPGAs, and/or the like), memory 804, and one or more transceivers 806 each including one or more transmitters 808 and one or more receivers 810 coupled to one or more antennas 812. The transceiver(s) 806 includes radio-front end circuitry connected to the antenna(s) 812 that is configured to condition signals communicated between the antenna(s) 812 and the processor(s) 802, as will be appreciated by on of ordinary skill in the art. The processors 802 are also referred to herein as processing circuitry. The transceivers 806 are also referred to herein as radio circuitry. In some embodiments, the functionality of the wireless communication device 800 described above (e.g., one or more functions of the UE 112 described herein, e.g., with respect to Figure 4) may be fully or partially implemented in software that is, e.g., stored in the memory 804 and executed by the processor(s) 802. Note that the wireless communication device 800 may include additional components not illustrated in Figure 8 such as, e.g., one or more user interface components (e.g., an input/output interface including a display, buttons, a touch screen, a microphone, a speaker(s), and/or the like and/or any other components for allowing input of information into the wireless communication device 800 and/or allowing output of information from the wireless communication device 800), a power supply (e.g., a battery and associated power circuitry), etc.

In some embodiments, a computer program including instructions which, when executed by at least one processor, causes the at least one processor to carry out the functionality of the wireless communication device 800 according to any of the embodiments described herein (e.g., one or more functions of the AMF 200 described herein, e.g., with respect to Figure 4) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

### Figure 9

**Figure 9** is a schematic block diagram of the wireless communication device 800 according to some other embodiments of the present disclosure. The wireless communication device 800 includes one or more modules 900, each of which is implemented in software. The module(s) 900 provide the functionality of the wireless communication device 800 described herein (e.g., one or more functions of the AMF 200 described herein, e.g., with respect to Figure 4).

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

### Abbreviations

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core |
| • 5GS | Fifth Generation System |
| • AF | Application Function |
| • AMF | Access and Mobility Management Function |
| • AN | Access Network |
| • AUSF | Authentication Server Function |
| • DN | Data Network |
| • eNB | Enhanced or Evolved Node B |
| • EPC | Evolved Packet Core |
| • E-UTRA | Evolved Universal Terrestrial Radio Access |
| • gNB | New Radio Base Station |
| • HSS | Home Subscriber Server |
| • IoT | Internet of Things |
| • IP | Internet Protocol |
| • LTE | Long Term Evolution |
| • MME | Mobility Management Entity |
| • MTC | Machine Type Communication |
| • NEF | Network Exposure Function |
| • NF | Network Function |
| • NR | New Radio |
| • NRF | Network Function Repository Function |
| • NSSF | Network Slice Selection Function |
| • PCF | Policy Control Function |
| • P-GW | Packet Data Network Gateway |
| • QoS | Quality of Service |
| • RAN | Radio Access Network |
| • SCEF | Service Capability Exposure Function |
| • SMF | Session Management Function |
| • UDM | Unified Data Management |
| • UE | User Equipment |
| • UPF | User Plane Function |

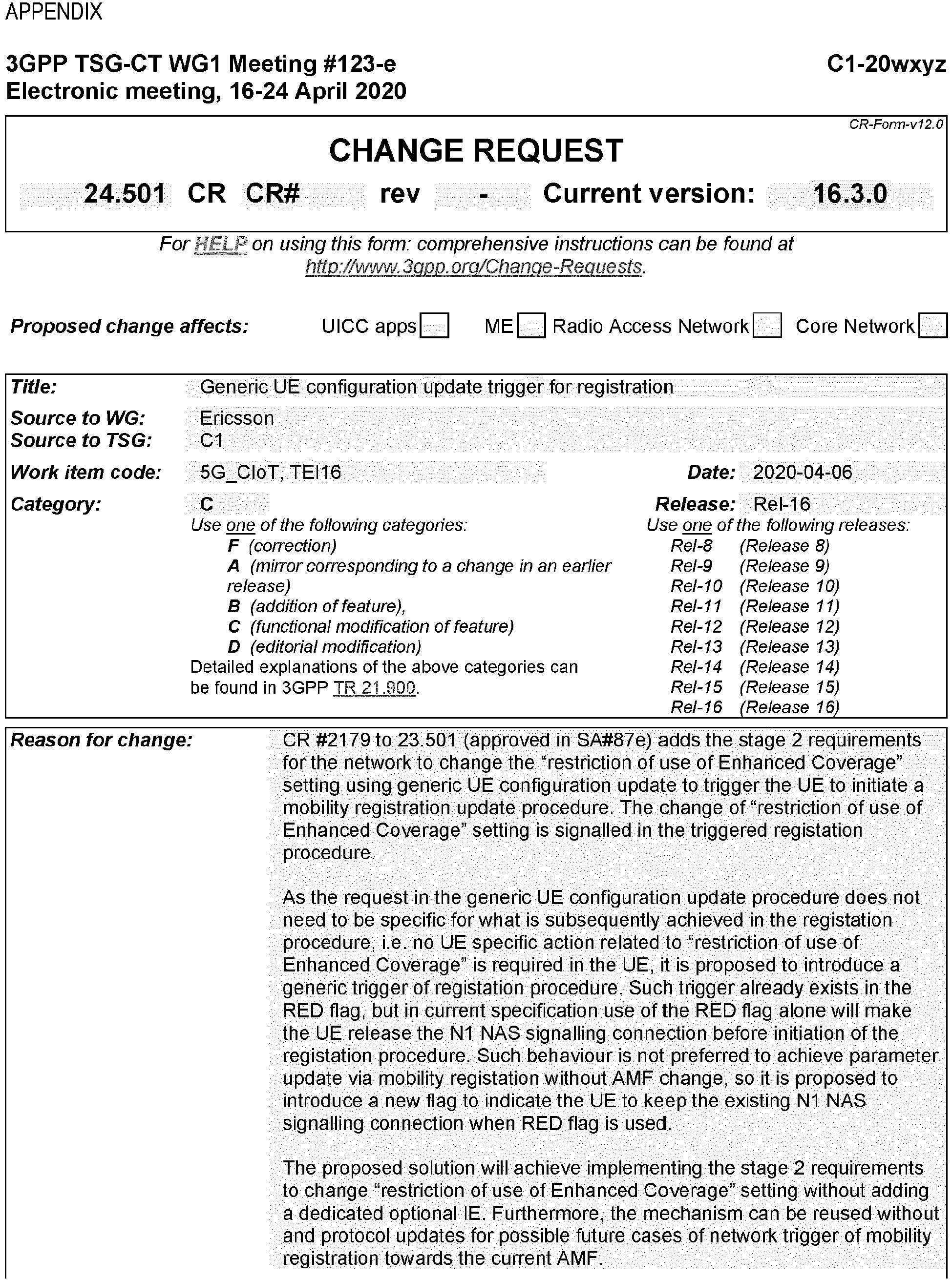

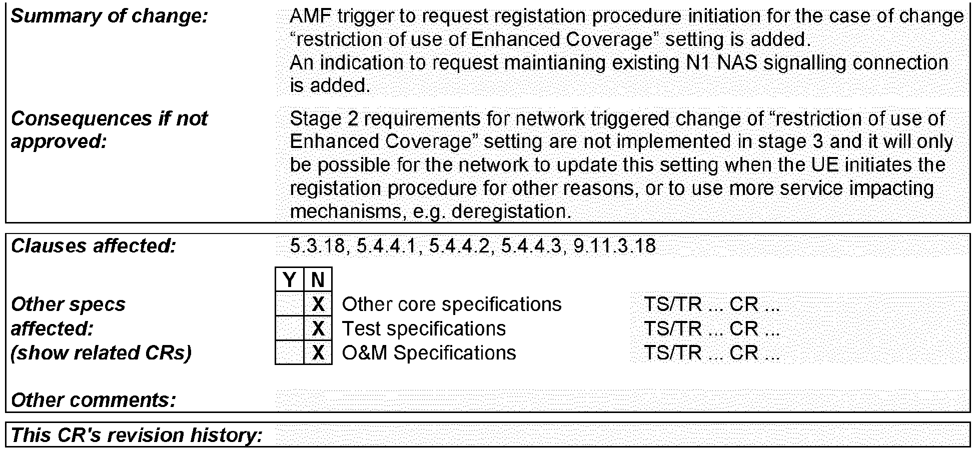

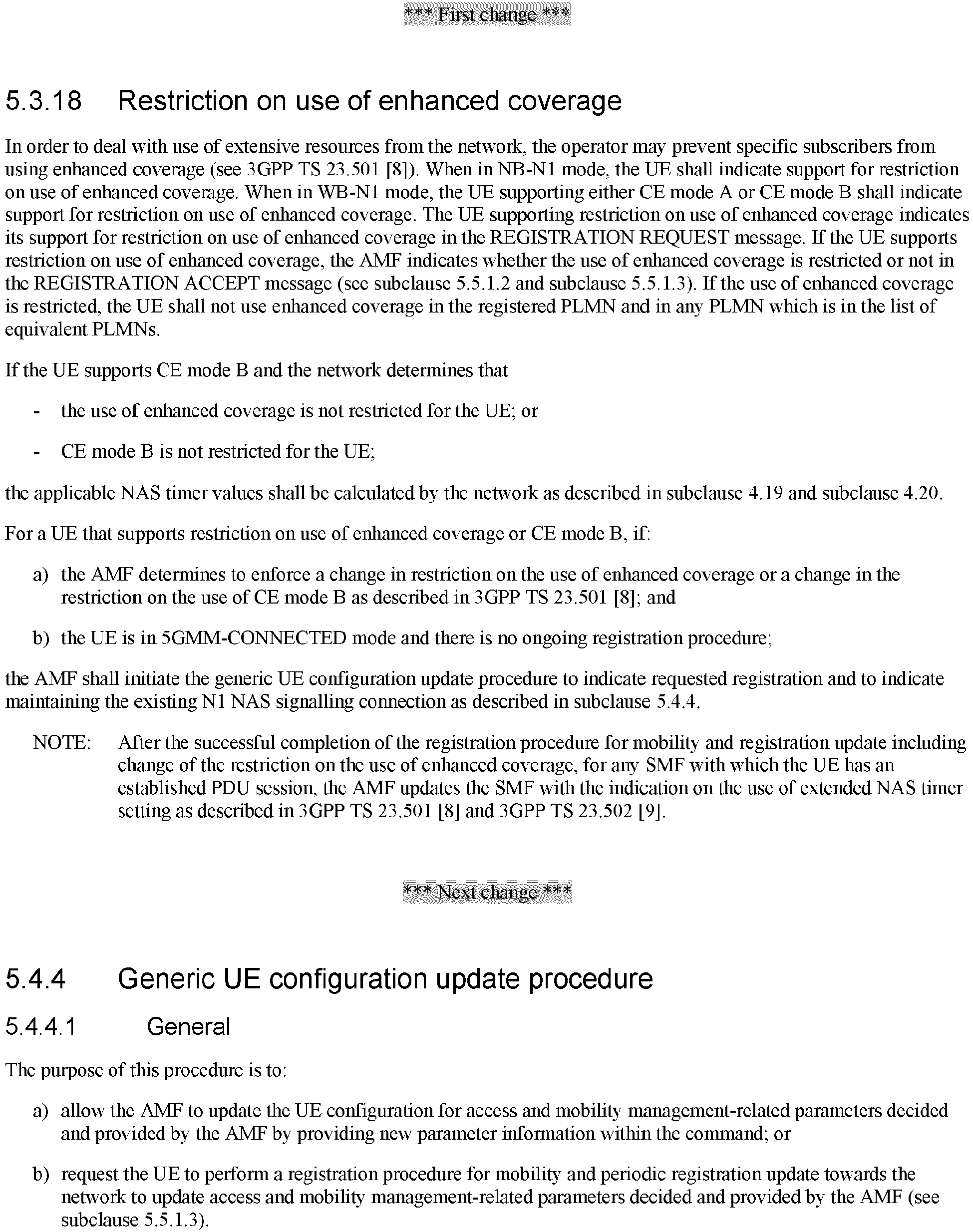

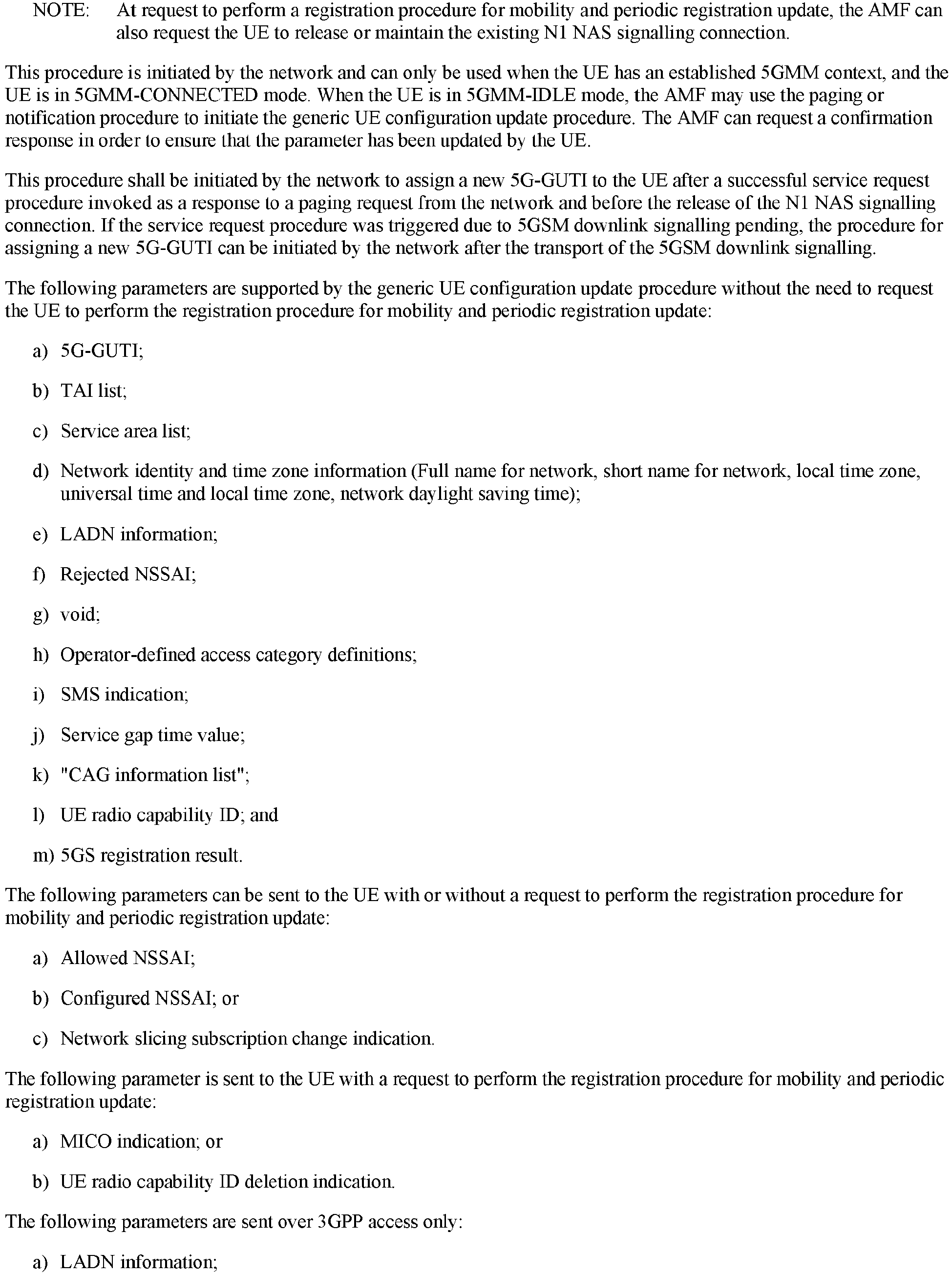

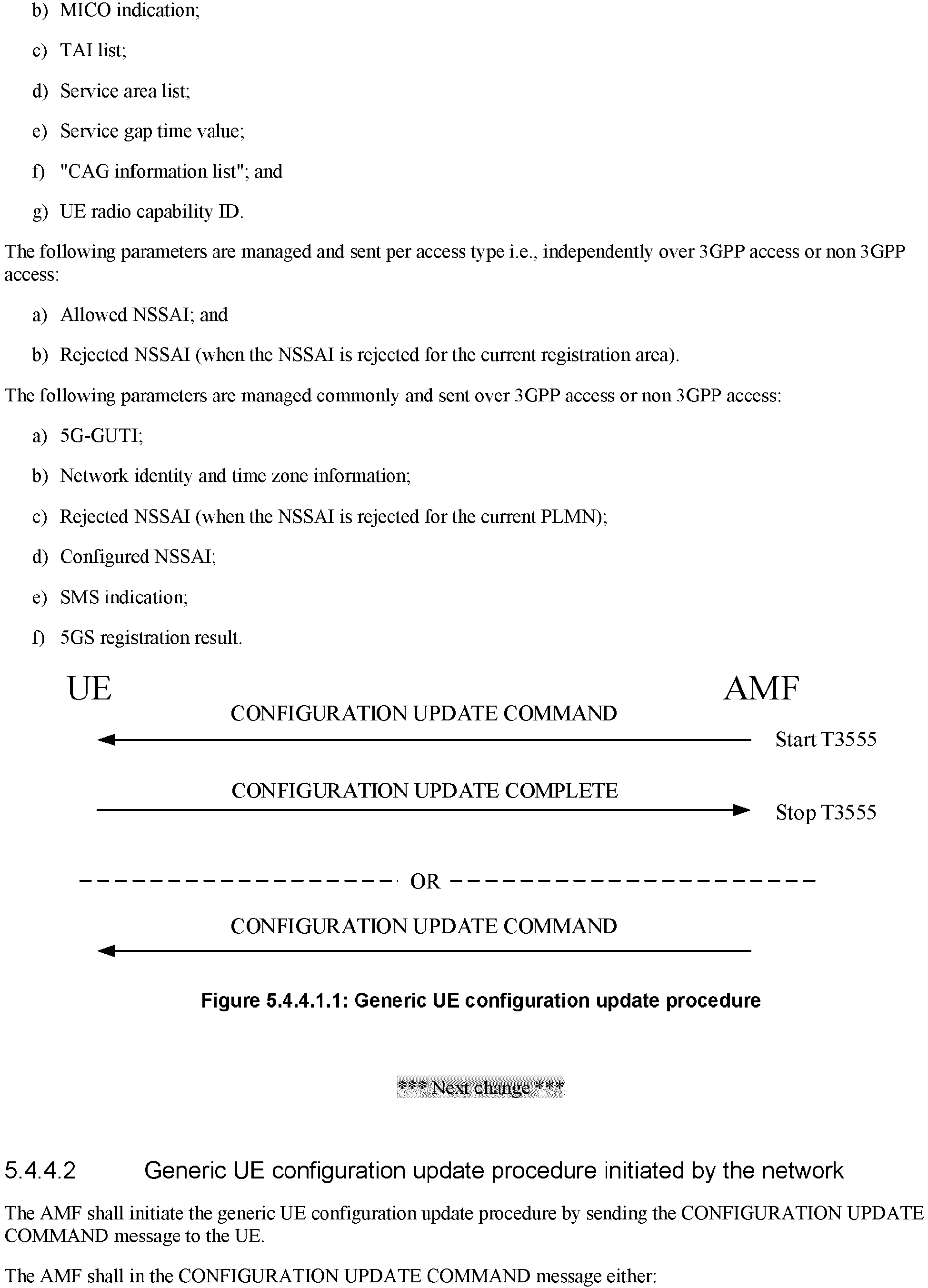

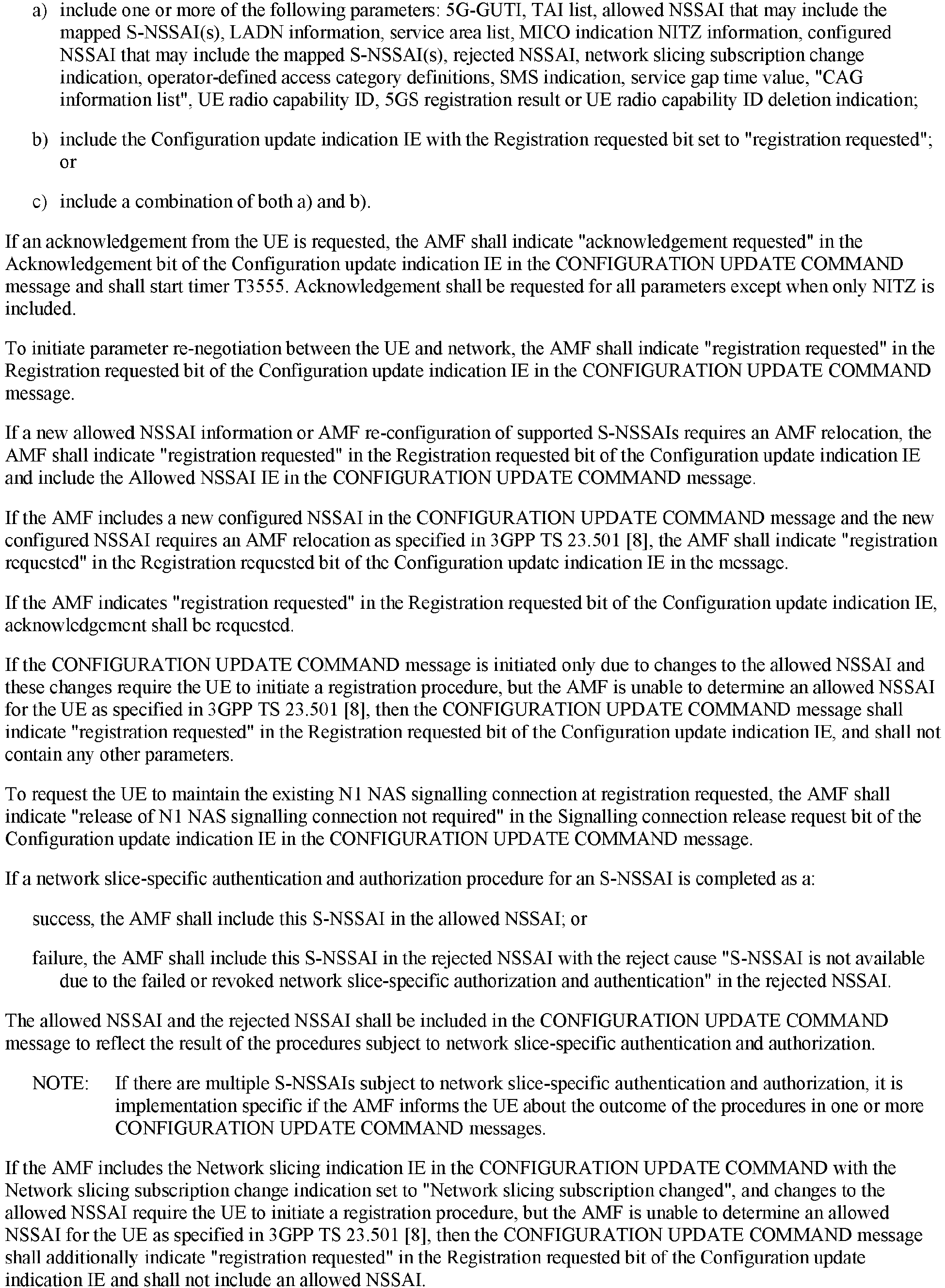

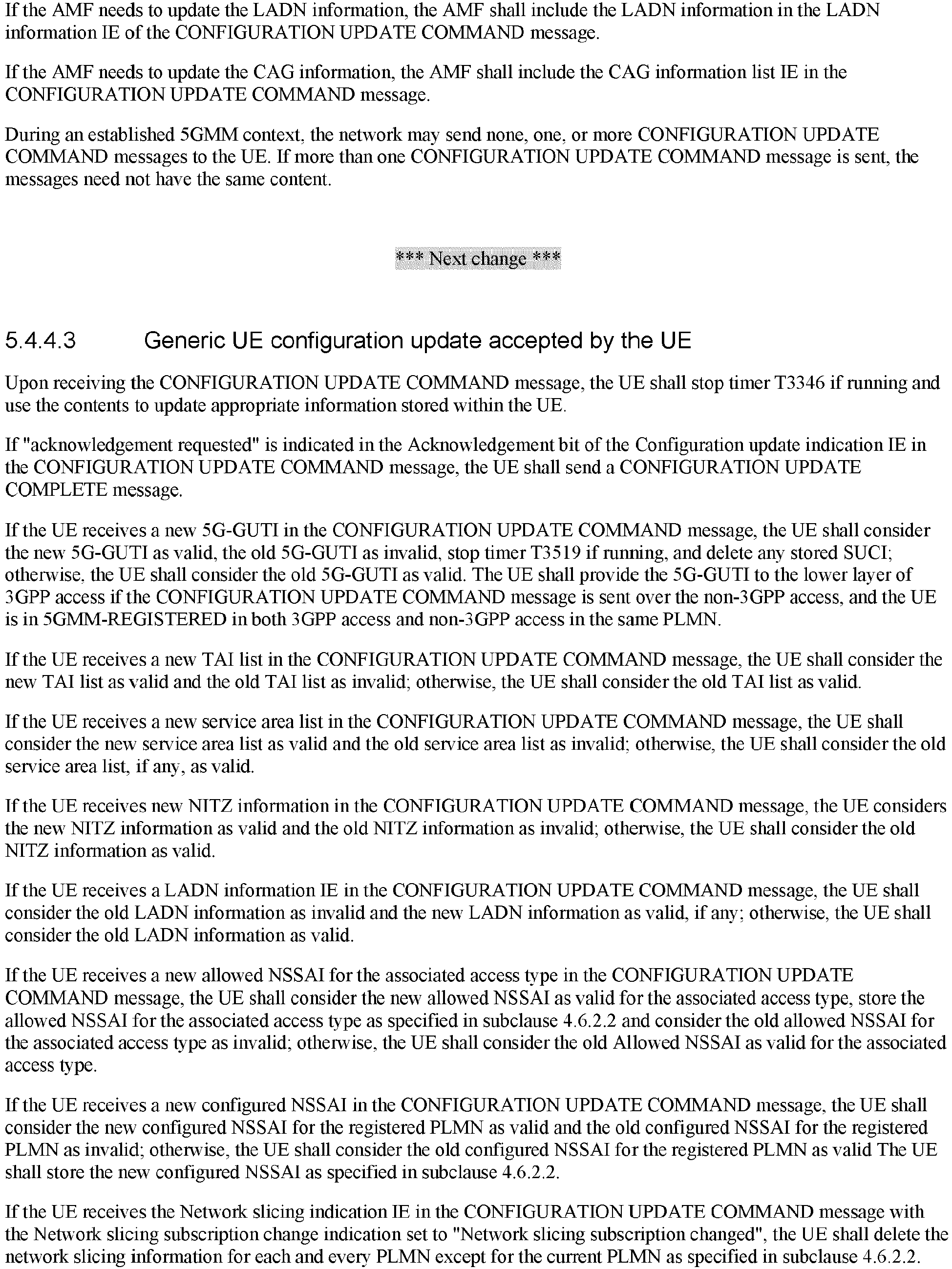

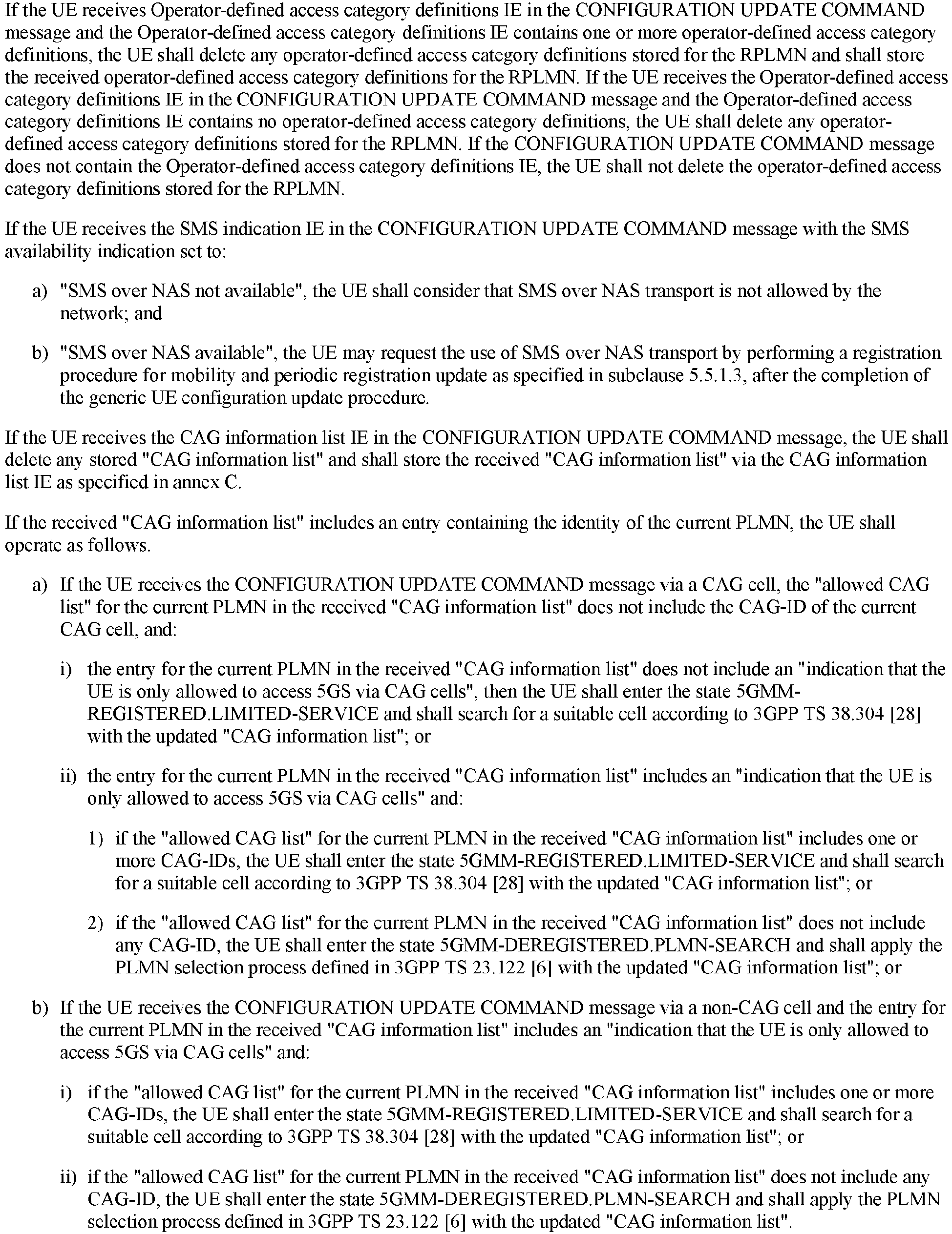

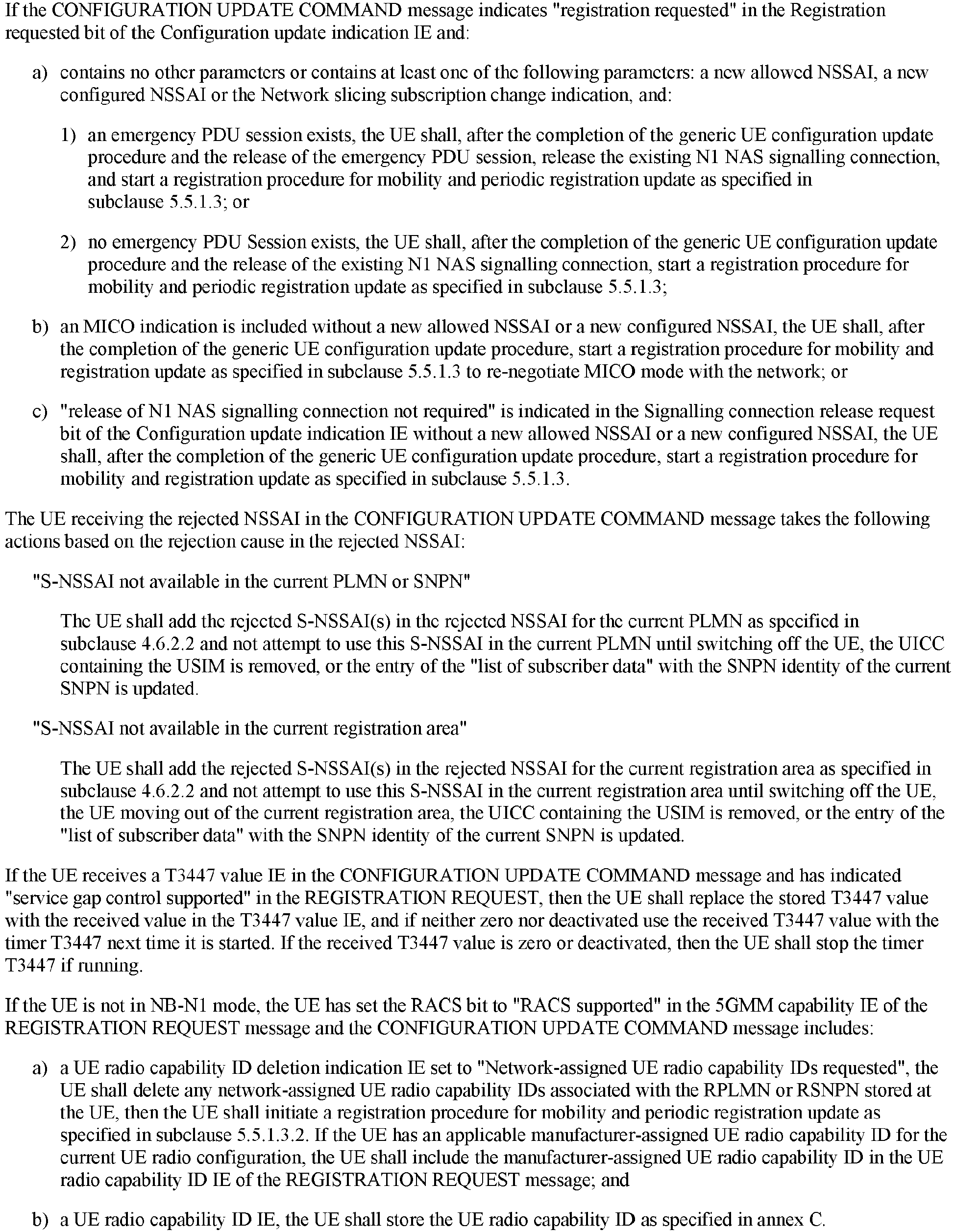

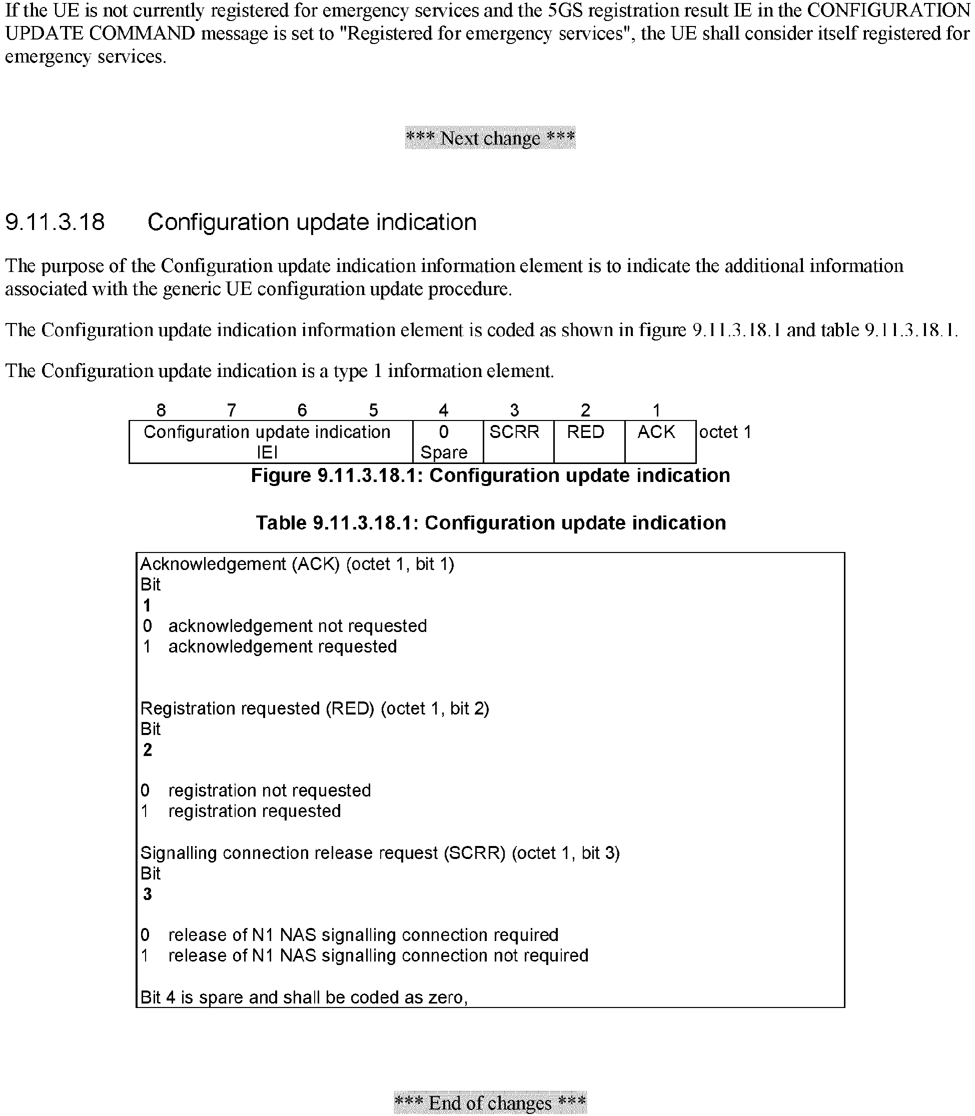

## Claims

1. A method for a User Equipment, UE, configuration update procedure, the method being performed by a UE (112), the method comprising:
receiving (400), from a network node (200), a configuration update command that comprises information that indicates to the UE (112) that the UE is to perform a registration procedure, and an indication which indicates whether or not the UE (112) is to maintain an existing N1 non-access stratum, NAS, connection of the UE; and
performing (402) one or more actions in accordance with the configuration update command, wherein performing (402) the one or more actions comprise performing the registration procedure and releasing or refraining from releasing the existing N1 NAS connection in accordance with the indication when performing the registration procedure.

2. The method of claim 1 wherein the indication is a one-bit indication that indicates that the UE (112) is required to release the existing NAS connection if set to a first binary value and indicates that the UE (112) is not required to release the existing NAS connection if set to a second binary value.

3. The method of any of claim 1 to 2 wherein the indication is a general indication that is applicable to two or more reasons for the configuration update command.

4. The method of any of claim 1 to 3 wherein the network node (200) is an Access and Mobility Management Function, AMF, (200).

5. A User Equipment, UE, (112) adapted to:
receive (400), from a network node (200), a configuration update command that comprises information that indicates to the UE (112) that the UE is to perform a registration procedure, and an indication which indicates whether or not the UE (112) is to maintain an existing N1 non-access stratum, NAS, connection of the UE, and
perform (402) one or more actions in accordance with the configuration update command, wherein perform (402) the one or more actions comprise perform the registration procedure and releasing or refraining from releasing the existing N1 NAS connection in accordance with the indication when performing the registration procedure.

6. The UE (112) of claim 5 wherein the UE (112) is further adapted to perform the method of any of claim 2 to 4.

7. The UE (112) of claim 5 or 6 wherein the UE (112) comprises:
one or more transmitters (808);
one or more receivers (810); and
processing circuitry (802) associated with the one or more transmitters (808) and the one or more receivers (810), the processing circuitry (802) configured to cause the UE (112) to:
receive (400) the configuration update command from the network node (200); and
perform (402) the one or more actions in accordance with the configuration update command.

## Patentansprüche

1. Verfahren für einen Konfigurationsaktualisierungsvorgang für Benutzervorrichtungen, UE, wobei das Verfahren durch eine UE (112) durchgeführt wird, wobei das Verfahren Folgendes umfasst:
Empfangen (400), von einem Netzwerkknoten (200), eines Konfigurationsaktualisierungsbefehls, der Informationen, die der UE (112) angeben, dass die UE einen Registrierungsvorgang durchzuführen hat, und eine Angabe, die angibt, ob die UE (112) eine bestehende N1-Non-Access-Stratum-Verbindung (N1-NAS-Verbindung) der UE beizubehalten hat oder nicht, umfasst;
Durchführen (402) einer oder mehrerer Maßnahmen in Übereinstimmung mit dem Konfigurationsaktualisierungsbefehl, wobei das Durchführen (402) der einen oder der mehreren Maßnahmen Durchführen des Registrierungsvorgangs und Freigeben oder Unterlassen von Freigeben der bestehenden N1-NAS-Verbindung in Übereinstimmung mit der Angabe umfasst, wenn der Registrierungsvorgang durchgeführt wird.

2. Verfahren nach Anspruch 1, wobei die Angabe eine Einbit-Angabe ist, die, wenn sie auf einen ersten binären Wert eingestellt ist, angibt, dass erforderlich ist, dass das UE (112) die bestehende NAS-Verbindung freigibt, und, wenn sie auf einen zweiten binären Wert eingestellt ist, angibt, dass es nicht erforderlich ist, dass die UE (112) die bestehende NAS-Verbindung freigibt.

3. Verfahren nach einem von Anspruch 1 bis 2, wobei die Angabe eine allgemeine Angabe ist, die auf zwei oder mehr Ursachen für den Konfigurationsaktualisierungsbefehl anwendbar ist.

4. Verfahren nach einem von Anspruch 1 bis 3, wobei der Netzwerkknoten (200) eine Access and Mobility Management Function, AMF, (200) ist.

5. Benutzervorrichtung, UE, (112), die zu Folgendem ausgelegt ist:
Empfangen (400), von einem Netzwerkknoten (200), eines Konfigurationsaktualisierungsbefehls, der Informationen, die der UE (112) angeben, dass die UE einen Registrierungsvorgang durchzuführen hat, und eine Angabe, die angibt, ob die UE (112) eine bestehende N1-Non-Access-Stratum-Verbindung (N1-NAS-Verbindung) der UE beizubehalten hat oder nicht, umfasst, und
Durchführen (402) einer oder mehrerer Maßnahmen in Übereinstimmung mit dem Konfigurationsaktualisierungsbefehl, wobei das Durchführen (402) der einen oder der mehreren Maßnahmen Durchführen des Registrierungsvorgangs und Freigeben oder Unterlassen von Freigeben der bestehenden N1-NAS-Verbindung in Übereinstimmung mit der Angabe umfasst, wenn der Registrierungsvorgang durchgeführt wird.

6. UE (112) nach Anspruch 5, wobei die UE (112) ferner dazu ausgelegt ist, das Verfahren nach einem von Anspruch 2 bis 4 durchzuführen.

7. UE (112) nach Anspruch 5 oder 6, wobei die UE (112) Folgendes umfasst:
einen oder mehrere Sender (808)
einen oder mehrere Empfänger (810); und
eine Verarbeitungsschaltung (802), die dem einen oder den mehreren Sendern (808) und dem einen oder den mehreren Empfängern (810) zugeordnet ist, wobei die Verarbeitungsschaltung (802) dazu konfiguriert ist, die UE (112) zu Folgendem zu veranlassen:
Empfangen (400) des Konfigurationsaktualisierungsbefehls von dem Netzwerkknoten (200); und
Durchführen (402) der einen oder mehreren Maßnahmen in Übereinstimmung mit dem Konfigurationsaktualisierungsbefehl.

## Revendications

1. Procédé pour une procédure de mise à jour de configuration d'Équipement Utilisateur, UE, le procédé étant exécuté par un UE (112), le procédé comprenant :
la réception (400), d'un noeud de réseau (200), d'une commande de mise à jour de configuration qui comprend des informations qui indiquent à l'UE (112) que l'UE doit exécuter une procédure d'enregistrement, et une indication qui indique si oui ou non l'UE (112) doit maintenir une connexion de strate de non-accès, NAS, N1 existante de l'UE ; et
l'exécution (402) d'une ou plusieurs actions conformément à la commande de mise à jour de configuration, dans lequel l'exécution (402) des une ou plusieurs actions comprend l'exécution de la procédure d'enregistrement et la libération ou l'abstention de libérer la connexion NAS N1 existante conformément à l'indication lors de l'exécution de la procédure d'enregistrement.

2. Procédé selon la revendication 1, dans lequel l'indication est une indication à un bit qui indique que l'UE (112) est tenu de libérer la connexion NAS existante si elle est réglée sur une première valeur binaire et indique que l'UE (112) n'est pas tenu de libérer la connexion NAS existante si elle est réglée sur une seconde valeur binaire.

3. Procédé selon l'une quelconque des revendications 1 à 2, dans lequel l'indication est une indication générale qui est applicable à deux raisons ou plus pour la commande de mise à jour de configuration.

4. Procédé selon l'une quelconque des revendications 1 à 3, dans lequel le noeud de réseau (200) est une Fonction de Gestion d'Accès et de Mobilité, AMF, (200).

5. Équipement Utilisateur, UE, (112) conçu pour :
recevoir (400), d'un noeud de réseau (200), une commande de mise à jour de configuration qui comprend des informations qui indiquent à l'UE (112) que l'UE doit exécuter une procédure d'enregistrement, et une indication qui indique si oui ou non l'UE (112) doit maintenir une connexion de strate de non-accès, NAS, N1 existante de l'UE, et
exécuter (402) une ou plusieurs actions conformément à la commande de mise à jour de configuration, dans lequel l'exécution (402) des une ou plusieurs actions comprend l'exécution de la procédure d'enregistrement et la libération ou l'abstention de libérer la connexion NAS N1 existante conformément à l'indication lors de l'exécution de la procédure d'enregistrement.

6. UE (112) selon la revendication 5, dans lequel l'UE (112) est en outre conçu pour exécuter le procédé selon l'une quelconque des revendications 2 à 4.

7. UE (112) selon la revendication 5 ou 6, dans lequel l'UE (112) comprend :
un ou plusieurs émetteurs (808) ;
un ou plusieurs récepteurs (810) ; et
un circuit de traitement (802) associé aux un ou plusieurs émetteurs (808) et aux un ou plusieurs récepteurs (810), le circuit de traitement (802) étant configuré pour amener l'UE (112) à :
recevoir (400) la commande de mise à jour de configuration du noeud de réseau (200) ; et
exécuter (402) les une ou plusieurs actions conformément à la commande de mise à jour de configuration.
